# EUROPÄISCHE PATENTANMELDUNG

(11) **EP 3 588 416 A1**
(43) Veröffentlichungstag der Anmeldung: **01.01.2020**
(21) Anmeldenummer: 19176941.3
(22) Anmeldetag: 28.05.2019
(51) Int. Cl.: G06Q 20/38, G06Q 20/06, G06Q 20/10

(54) **VERFAHREN UND VORRICHTUNG ZUM BETREIBEN EINES DIGITALEN BEZAHLSYSTEMS**

(30) Priorität: 29.06.2018 DE 102018210748
(71) Anmelder: Robert Bosch GmbH, 70442 Stuttgart (DE)
(72) Erfinder: Weissenmayer, Simon, 74223 Flein (DE)

(57) **Zusammenfassung**

Verfahren (10) zum Betreiben eines digitalen Bezahlsystems (20), gekennzeichnet durch folgende Merkmale:
- Konten (31, 32) werden jeweils einer von mehreren Blockketten (21, 22, 23, 24, 25) zugeordnet (11), welche mindestens eine erste Blockkette (21) und eine zweite Blockkette (22) umfassen,
- für jede Blockkette (21, 22, 23, 24, 25) wird ein Zentralkonto (41, 42, 43, 44, 45, 51) geführt (12) und
- bei einer Überweisung eines Geldbetrages (30) von einem der ersten Blockkette (21) zugeordneten Konto (31) auf ein der zweiten Blockkette (22) zugeordnetes Konto (32) wird der Geldbetrag (30) dem Zentralkonto (41) der ersten Blockkette (21) hinzugefügt (13) und dem Zentralkonto (42) der zweiten Blockkette (22) entnommen (14).

## Beschreibung

Die vorliegende Erfindung betrifft ein Verfahren zum Betreiben eines digitalen Bezahlsystems. Die vorliegende Erfindung betrifft darüber hinaus eine entsprechende Vorrichtung, ein entsprechendes Computerprogramm sowie ein entsprechendes Speichermedium.

### Stand der Technik

Bekannt sind digitale Bezahlsysteme, sogenannte Kryptowährungen, auf der Grundlage dezentraler Transaktionssysteme in Form eines verteilten Hauptbuches (*distributed ledger*), etwa einer Blockkette (*blockchain*) oder eines gerichteten azyklischen Graphen (*directed acyclic graph,* DAG).

DE102016206916A1 betrifft ein elektronisches Verfahren zur kryptographisch gesicherten Überweisung eines Betrags einer Kryptowährung durch eine Transaktion des Betrags von einer einem ersten Client zugeordneten Ausgangsadresse auf eine einem zweiten Client zugeordnete Zieladresse, wobei eine Mehrzahl von Clients vorgesehen ist, welche zumindest den ersten und den zweiten Client umfasst, wobei auf den Clients jeweils ein Walletprogramm zur Realisierung eines Client-Nodes der Kryptowährung installiert ist, wobei ein Transaktionsserver vorgesehen ist, auf dem ein Transaktionsprogramm zur Realisierung eines Server-Nodes der Kryptowährung installiert ist, wobei das Transaktionsprogramm dazu konfiguriert ist Blöcke der Blockchain mit Transaktionsdaten zu erzeugen, wobei der Transaktionsserver einen privaten und einen öffentlichen Serverschlüssel eines asymmetrischen Serverschlüsselpaars umfasst, und wobei der Transaktionsserver ein Serverzertifikat einer hierarchischen PKI mit einer zentralen Wurzelzertifizierungsinstanz umfasst, welches dazu konfiguriert ist, als Nachweis der Authentizität des öffentlichen Serverschlüssels und der Berechtigung des Transaktionsservers zum Erzeugen von Blöcken der Blockchain zu dienen.

### Offenbarung der Erfindung

Die Erfindung stellt ein Verfahren zum Betreiben eines digitalen Bezahlsystems, eine entsprechende Vorrichtung, ein entsprechendes Computerprogramm sowie ein entsprechendes Speichermedium gemäß den unabhängigen Ansprüchen bereit.

Ein Vorzug dieser Lösung liegt in der Schaffung eines einzigen Kryptowährungssystems, das vielfältige Funktionsmerkmale bietet, mit akzeptablen Einbußen zu warten ist und bei dem ein einzelner Softwarefehler oder Angriff nicht zur Gefährdung des gesamten Systems führen kann. Mit diesem Kryptowährungssystem könnte bei vertretbaren Überweisungskosten ein weltweiter Zahlungsverkehr abgewickelt werden.

Hierzu können unterschiedliche, aber voneinander abhängige Blockketten parallel für ein einziges Währungssystem eingesetzt werden. Durch diese Abhängigkeit zwischen den Blockketten kann der Gegenwert der "Münzen" der unterschiedlichen Blockketten zueinander stabil gehalten werden. Unabhängig davon, ob die aktuelle Blockkette für die besonders sichere Aufbewahrung großer Vermögenswerte oder aber zum Abschluss intelligenter Verträge (*smart contracts*) genutzt werden soll, lassen sich die Münzen somit bequem von einer Blockkette an die andere überweisen und haben in jeder Blockkette den gleichen stabilen Wert.

Die Vorteile unterschiedlicher Technologien können auf diese Weise in einer Kryptowährung vereint werden. Bei Leistungsproblemen einzelner Blockketten könnten hierbei einfach weitere Blockketten mit gleichen oder ähnlichen Eigenschaften dem System hinzugefügt werden, dessen Verfügbarkeit somit steigt.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, dass, wenn durch einen Fehler oder durch einen Angriff auf eine Blockkette gleichsam "gefälschte Münzen" in Umlauf geraten sollten (*doublespending*), die Speicher der anderen Blockketten keine Überweisungen aus der betreffenden Blockkette mehr annehmen, sobald sie das Doublespending erkannt haben. Dies wäre zum Beispiel anzunehmen, wenn die Gesamtzahl an Münzen aller Konten inklusive Speicher der betroffenen Blockkette unerwartet ansteigt.

Gemäß einem weiteren Aspekt kann vorgesehen sein, dass eingehende Überweisungen mittels eines asymmetrischen Kryptosystems bestätigt werden. So können Angreifer nicht ohne Weiteres vortäuschen, bei einer Blockkette sei ein Überweisungsauftrag im Speicher angekommen.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 das Flussdiagramm eines Verfahrens gemäß einer ersten Ausführungsform.
Figur 2 Sender und Empfänger einer Überweisung in einem erfindungsgemäßen System.
Figur 3 schematisch den Ablauf des Überweisungsvorgangs im Bezahlsystem gemäß Figur 2.
Figur 4 ein Einführungsszenario zur Einführung einer erfindungsgemäßen Kryptowährung.
Figur 5 eine erste Architekturoption im Rahmen der einzuführenden Kryptowährung.
Figur 6 eine zweite Architekturoption im Rahmen der einzuführenden Kryptowährung.
Figur 7 schematisch ein Steuergerät gemäß einer zweiten Ausführungsform.

### Ausführungsformen der Erfindung

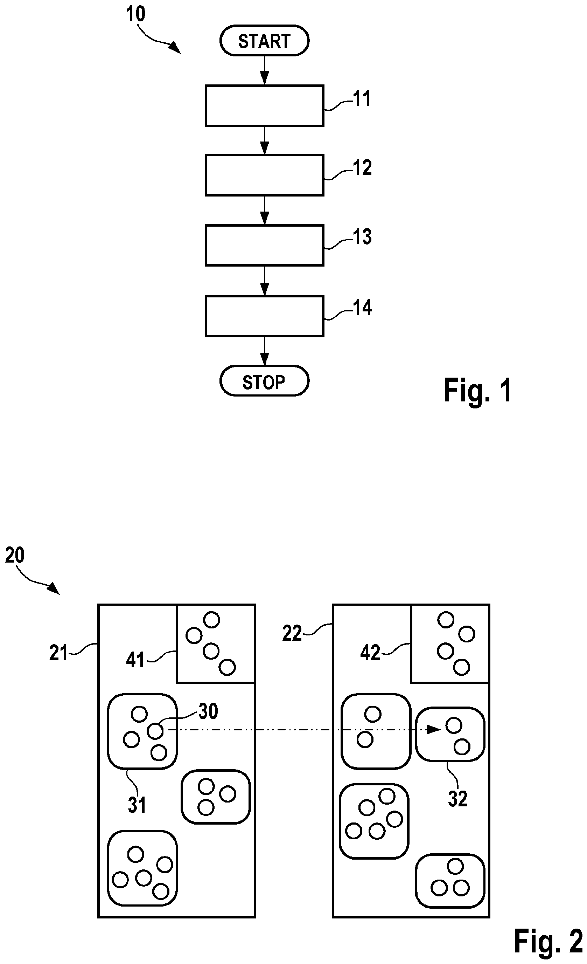

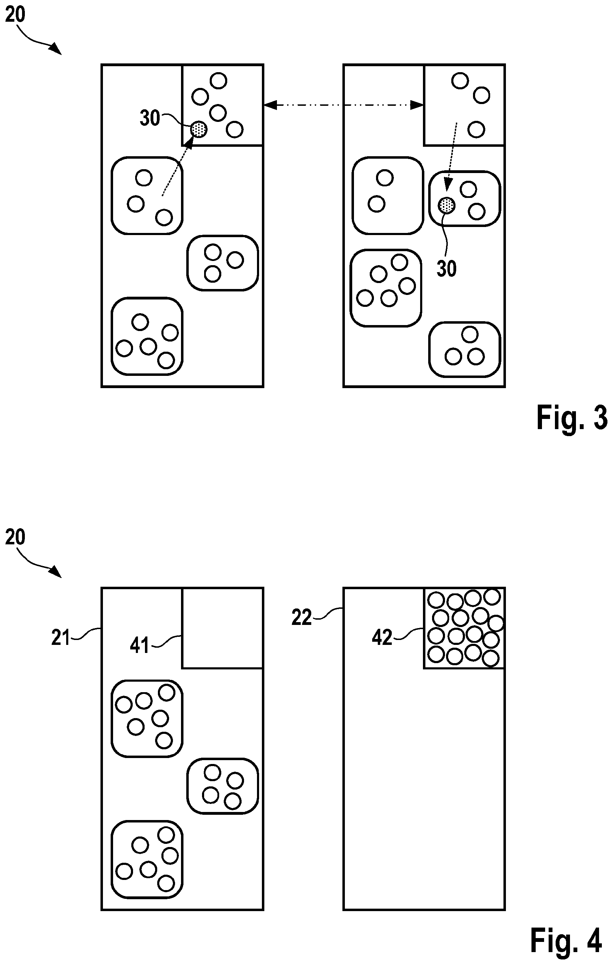

Figur 1 illustriert den grundlegenden Ablauf des erfindungsgemäßen Verfahrens (10), welches nunmehr anhand einer Zusammenschau der Figuren 2 und 3 erläutert sei.

Ein bereits in Figur 2 erkennbarer Grundgedanke besteht hierbei darin, dass jedes Konto (31, 32) einer von mehreren Blockketten (21, 22) zugeordnet (Prozess 11) und jeder Blockkette (21, 22) im Bezahlsystem (20) wiederum ein eigenes Zentralkonto (41, 42) zugeordnet wird (Prozess 12). Beim Überweisen eines - in den Figuren sinnbildlich als Münze dargestellten - Geldbetrages (30) zwischen den Blockketten (21, 22) wird dieser dem Zentralkonto (41) derjenigen Blockkette (21) hinzugefügt (Prozess 13), der das Absenderkonto zugeordnet ist, und dem Zentralkonto (42) derjenigen Blockkette (22) entnommen (Prozess 14), der das Empfängerkonto zugeordnet ist. Der Gesamtsaldo der im Rahmen des Bezahlsystems (20) verwalteten Konten (31, 32) bleibt bei diesem Vorgang konstant. Daraus folgt, dass auch die Anzahl der im Umlauf befindlichen Geldbeträge (30) konstant bleibt und der Gegenwert der Währung nicht beeinflusst wird.

Hierbei wird erst dann ein Geldbetrag (30) aus einem der Zentralkonten (41, 42) entnommen, wenn die Einzahlung in das Zentralkonto (41, 42) der jeweils anderen Blockkette (21, 22) als gesichert gilt. Eine Transaktion wiederum gilt erst dann als gesichert, wenn dies von genügend anderen Benutzern durch ihre Transaktionen bestätigt wurde.

Innerhalb der Adresse eines Kontos (31, 32) kann kenntlich gemacht werden, welcher Blockkette (21, 22) das Konto (31, 32) zugeordnet ist. Zum Beispiel kann allen Überweisungsadressen der ersten Blockkette (21) die Ziffernfolge "0001" und jenen der zweiten Blockkette (22) die Ziffernfolge "0002" vorangestellt werden. Wenn von einer der ersten Blockkette (21) zugeordneten Konto (31) an eine Adresse überwiesen werden soll, die nicht mit der Ziffernfolge "0001" beginnt, so wird der betreffende Geldbetrag (30) dem Zentralspeicher der ersten Blockkette (21) hinzugefügt (Prozess 13). Im Anschluss wird aus dem Zentralspeicher der anderen Blockkette (22) der entsprechende Geldbetrag (30) an diese Adresse überwiesen. Bevor ein Geldbetrag (30) dem Zentralkonto (41, 42) einer Blockkette (21, 22) entnommen wird (Prozess 14), wird stets geprüft, ob der entsprechende Geldbetrag (30) dem Zentralkonto (41, 42) der anderen Blockkette (21, 22) hinzugefügt wurde (Prozess 13).

Je mehr Blockketten (21, 22) das Bezahlsystem (20) umfasst und je gleichmäßiger das Vermögen von Personen und Firmen auf diese Blockketten (21, 22) verteilt ist, umso besser lassen sich kurzzeitige Ausfälle wegen Wartungsarbeiten an einzelnen Blockketten (21, 22) oder Totalausfälle z. B. wegen irreparabler Fehler verkraften.

Überweisungen "innerhalb" der Blockketten (21, 22) lassen sich mit den bekannten Methoden gut absichern. Allerdings könnten Angreifer gegenüber dem Zentralkonto (41, 42) einer Blockkette (21, 22) vortäuschen, auf dem Zentralkonto (41, 42) der anderen Blockkette (21, 22) sei ein Geldbetrag (30) hinzugefügt worden. Um dieses Risiko zu mindern, kann das Zentralkonto (41, 42) der letzteren Blockkette (21, 22) einen privaten Schlüssel nutzen, um damit die eingegangene Überweisung zu signieren. Die erste Blockkette (21, 22) würde den zugehörigen öffentlichen Schlüssel der zweiten Blockkette (21, 22) nutzen, um die Echtheit der eingegangenen Überweisung zu überprüfen.

Sollte es einem Angreifer gelingen, einen Geldbetrag (30) aus einem Zentralkonto (41, 42) zu entwenden, dann kann dem betreffenden Zentralkonto (41, 42) das Ausgeben weiterer Geldbeträge (30) verboten werden. Aus diesem Grund prüft jedes Zentralkonto (41, 42) beim Eingang einer Überweisung, ob dem Zentralkonto (41, 42) derjenigen Blockkette (21, 22), welcher der Empfänger zugeordnet ist, das Ausgeben weiterer Geldbeträge (30) möglich ist. Sollte dies nicht der Fall sein, dann ist auch keine Überweisung mehr an diese Blockkette (21, 22) möglich und das überprüfende Zentralkonto (41, 42) überweist den betreffenden Geldbetrag (30) zurück auf das Konto (31, 32) des Senders.

Im Rahmen des in Figur 4 gezeigten Einführungsszenarios kann eine neue Kryptowährung geschaffen oder eine bestehende Kryptowährung durch das Verfahren (10) erweitert werden. Beim Erweitern einer bestehenden Kryptowährung um eine weitere Blockkette (22) wird zunächst für die Funktion des Zentralkontos (41) der bestehenden Blockkette (21) eine spezielle Geldbörse (*wallet*) angelegt, die noch keinen Geldbetrag (30) enthält. Außerdem wird die neue Blockkette (22) ebenfalls mit einem entsprechenden Zentralkonto (42) erstellt, in welchem sich der Gesamtbetrag befindet.

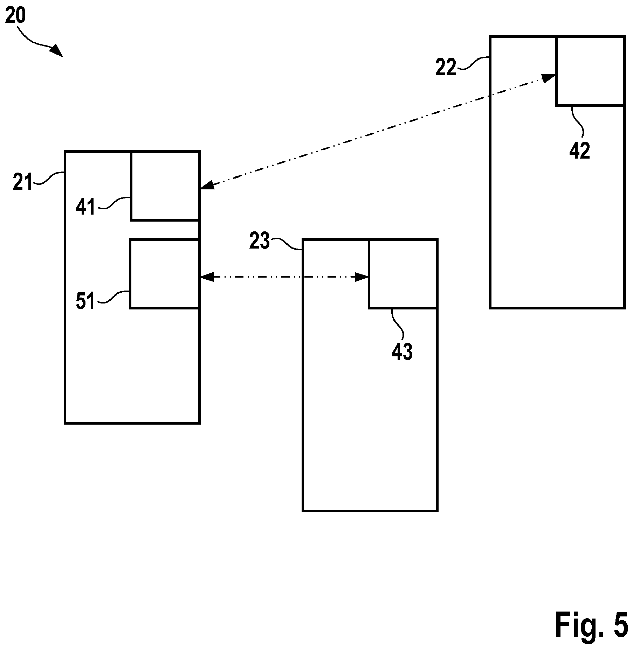

Für jede weitere Blockkette (21, 22, 23) kann, wie in Figur 5 dargestellt, ein separates Zentralkonto (41, 42, 43, 44, 45, 51) für Überweisungen zwischen den Blockketten (21, 22, 23) vorgehalten werden. Diese Herangehensweise birgt den Vorteil, dass übersichtlich bleibt, welche Blockkette (21, 22, 23) welcher anderen Blockkette (21, 22, 23) welchen Geldbetrag (30) gleichsam "schuldet". Allerdings erweist sich eine derartige Architektur beim Ausfall einer Blockkette (21, 22, 23) als nicht sonderlich robust, und Überweisungen über mehrere Blockketten (21, 22, 23) hinweg sind aufwändig.

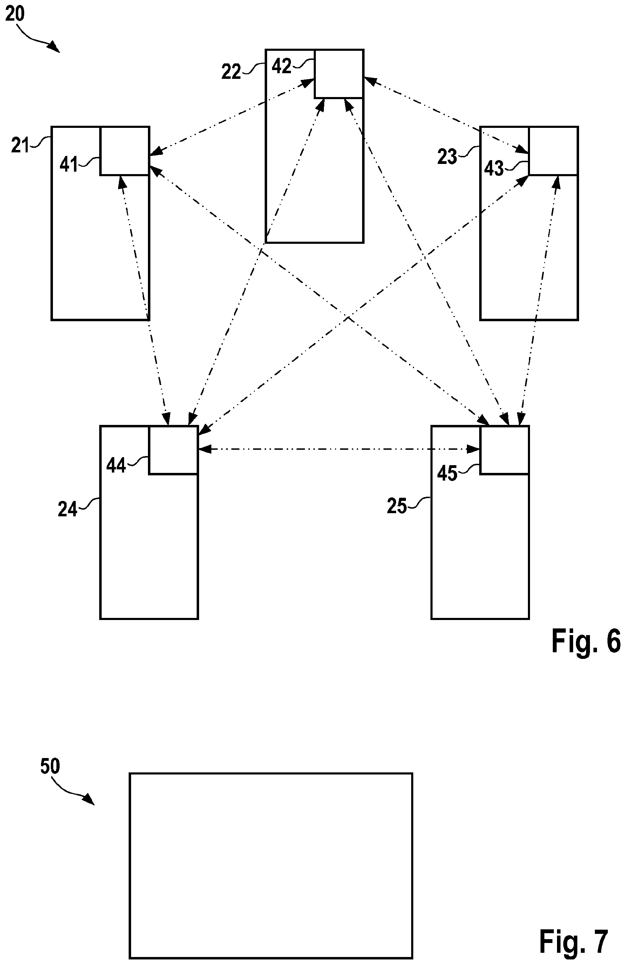

Aus diesen Gründen kann es vorzuziehen sein, wenn alle Blockketten (21, 22, 23, 24, 25), wie in Figur 6 dargestellt, die gleichen Zentralkonten benutzen. Immer wenn eine weitere Blockkette (21, 22, 23, 24, 25) hinzugefügt wird, sollte deren Zentralkonto (41, 42, 43, 44, 45) allen Zentralkonten bereits vorhandener Blockketten (21, 22, 23, 24, 25) bekannt gemacht werden, von denen Überweisungen entgegengenommen werden könnten.

Dies können schlicht alle anderen Blockketten (21, 22, 23, 24, 25) sein; es ist aber auch denkbar, dass nur die Zentralkonten ausgewählter Blockketten (21, 22, 23, 24, 25) miteinander verknüpft sind. In diesem Fall sind nur Überweisungen zwischen diesen Blockketten (21, 22, 23, 24, 25) möglich. Um den Ausfall einer Blockkette (21, 22, 23, 24, 25) tolerieren zu können, sollte jede Blockkette (21, 22, 23, 24, 25) mit mindestens zwei anderen Blockketten (21, 22, 23, 24, 25) verknüpft und ferner mit jeder anderen Blockkette (21, 22, 23, 24, 25) über zwei unabhängige Pfade verbunden sein.

Um möglichst wenige Änderungen bei einer bereits etablierten Blockkette (21, 22, 23, 24, 25) vornehmen zu müssen, kann auch innerhalb dieser Blockkette (21, 22, 23, 24, 25) ein Konto als Speicher eingerichtet werden, auf den Geldbeträge (30) mit einer gewöhnlichen Überweisungsadresse übertragen werden. Zusätzlich zu einer solchen Überweisung ließe sich die Zieladresse derjenigen Blockkette (21, 22, 23, 24, 25), der das Empfängerkonto zugeordnet ist, in einem weiteren Feld übertragen, das andernfalls für anderweitige Informationen genutzt würde. Dadurch wäre keine Änderung an der betreffenden Technologie notwendig.

Im Hinblick auf Skalierbarkeit und Update führt bei den meisten Kryptowährungssystemen eine höhere Anzahl an Überweisungen zu höheren Transferzeiten. Außerdem steigt der Speicherbedarf für die Blockketten (21, 22, 23, 24, 25) in den meisten Fällen mit der Zeit kontinuierlich an. Immer wenn eine Blockkette (21, 22, 23, 24, 25) wegen zu langen Transferzeiten entlastet werden muss, wird eine weitere Blockkette (21, 22, 23, 24, 25) dem Bezahlsystem (20) hinzugefügt, während die bisherigen Blockketten (21, 22, 23, 24, 25) weiter genutzt werden. Wenn der Speicherbedarf einer Blockkette (21, 22, 23, 24, 25) zu große Ausmaße annimmt, dann kann dem System (20) ebenso eine weitere Blockkette (21, 22, 23, 24, 25) hinzugefügt werden. Alle Kontostände der alten Blockkette (21, 22, 23, 24, 25) werden auf die neue Blockkette (21, 22, 23, 24, 25) überwiesen oder kopiert und im Anschluss wird die alte Blockkette (21, 22, 23, 24, 25) nicht mehr weiter benutzt und kann aus dem Speicher entfernt werden. Das gleiche Vorgehen ist möglich, wenn inkompatible Änderungen an einer Blockkette (21, 22, 23, 24, 25) vorgenommen werden sollen.

Dieses Verfahren (10) kann beispielsweise in Software oder Hardware oder in einer Mischform aus Software und Hardware beispielsweise in einem Steuergerät (50) implementiert sein, wie die schematische Darstellung der Figur 2 verdeutlicht.

## Patentansprüche

1. Verfahren (10) zum Betreiben eines digitalen Bezahlsystems (20),
**gekennzeichnet durch** folgende Merkmale:
- Konten (31, 32) werden jeweils einer von mehreren Blockketten (21, 22, 23, 24, 25) zugeordnet (11), welche mindestens eine erste Blockkette (21) und eine zweite Blockkette (22) umfassen,
- für jede Blockkette (21, 22, 23, 24, 25) wird ein Zentralkonto (41, 42, 43, 44, 45, 51) geführt (12) und
- bei einer Überweisung eines Geldbetrages (30) von einem der ersten Blockkette (21) zugeordneten Konto (31) auf ein der zweiten Blockkette (22) zugeordnetes Konto (32) wird der Geldbetrag (30) dem Zentralkonto (41) der ersten Blockkette (21) hinzugefügt (13) und dem Zentralkonto (42) der zweiten Blockkette (22) entnommen (14).

2. Verfahren (10) nach Anspruch 1,
**gekennzeichnet durch** folgendes Merkmal:
- der Geldbetrag (30) wird dem Zentralkonto (42) der zweiten Blockkette (22) erst entnommen (14), wenn eine Bestätigung für das Hinzufügen (13) des Geldbetrages (30) zum Zentralkonto (41) der ersten Blockkette (21) vorliegt.

3. Verfahren (10) nach Anspruch 2,
**gekennzeichnet durch** folgendes Merkmal:
- die Bestätigung erfolgt durch eine Vielzahl von Benutzern des Bezahlsystems (20).

4. Verfahren (10) nach Anspruch 2 oder 3,
**gekennzeichnet durch** folgendes Merkmal:
- die Bestätigung wird mittels eines asymmetrischen Kryptosystems übertragen.

5. Verfahren (10) nach einem der Ansprüche 1 bis 4,
**gekennzeichnet durch** folgendes Merkmal:
- die Konten (31, 32) tragen jeweils eine Kennung, welche die Blockkette (21, 22, 23, 24, 25) bezeichnet, der das jeweilige Konto (31, 32) zugeordnet ist.

6. Verfahren (10) nach einem der Ansprüche 1 bis 5,
**gekennzeichnet durch** folgende Merkmale:
- wenn eine der Blockkette (21, 22, 23, 24, 25) von einem Cyberangriff oder Fehler betroffen ist, wird die Blockkette (21, 22, 23, 24, 25) gesperrt und
- weitere Überweisungen von der gesperrten Blockkette (21, 22, 23, 24, 25) zugeordneten Konten (31, 32) werden von den übrigen Blockketten (21, 22, 23, 24, 25) abgelehnt.

7. Verfahren (10) nach Anspruch 6,
**gekennzeichnet durch** folgendes Merkmal:
- der Cyberangriff oder Fehler wird durch die übrigen Blockketten (21, 22, 23, 24, 25) anhand eines unerwarteten Saldoanstiegs der der gesperrten Blockkette (21, 22, 23, 24, 25) zugeordneten Konten (31, 32) erkannt.

8. Computerprogramm, welches eingerichtet ist, das Verfahren (10) nach einem der Ansprüche 1 bis 7 auszuführen.

9. Maschinenlesbares Speichermedium, auf dem das Computerprogramm nach Anspruch 8 gespeichert ist.

10. Vorrichtung (50), die eingerichtet ist, das Verfahren (10) nach einem der Ansprüche 1 bis 7 auszuführen.
